# EUROPEAN PATENT SPECIFICATION

(11) **EP 2 510 795 B1**
(45) Date of publication and mention of the grant of the patent: **07.02.2018**
(21) Application number: 09851993.7
(22) Date of filing: 11.12.2009
(51) Int. Cl.: A23B 7/154, A23B 7/158, A23B 7/157

(54) **EQUIPMENT AND METHOD OF APPLICATION OF FUNGICIDES HAVING MAXIMUM AND CONSTANT EFFICACY WITH ZERO WASTE**
GERÄT UND VERFAHREN ZUR ANWENDUNG VON FUNGIZIDEN MIT MAXIMALER UND KONSTANTER WIRKUNG OHNE ABFALL
EQUIPEMENT ET PROCÉDÉ D'APPLICATION DE FONGICIDES D'EFFICACITÉ MAXIMALE ET CONSTANTE, SANS DÉCHET

(43) Date of publication of application: 17.10.2012
(73) Proprietor: Productos Citrosol, S.A., 46721 Valencia (ES)
(72) Inventor: Bretó Miralles, Jorge, E-46721 Valencia (ES); Navarro Gregori, Inmaculada, E-46721 Valencia (ES); Orihuel Iranzo, Benito, E-46721 Valencia (ES)
(74) Representative: Carpintero Lopez, Francisco
(86) International application number: PCT/ES2009/070576
(87) International publication number: WO 2011/070183

(56) References cited:
- EP-A1- 1 378 172
- EP-A2- 1 095 573
- DE-U1-202004 015 928
- ES-A1- 2 107 380
- ES-A1- 2 144 343
- ES-A1- 2 325 146
- ES-A6- 2 014 655
- ES-U- 1 053 464
- US-A- 5 148 738
- US-A- 5 850 783
- SOTO, S.A.: 'Evaluacion de la aplicacion en postcosecha del fungicida "pyrimethanil" via termonebulizacion en el control de Botrytis cinerea en manzana CV' FUJI. DEGREE REPORT. UNIVERSIDAD DE TALCA. FACULTAD DE CIENCIAS AGRARIAS. ESCUELA DE AGRONOMIA CHILE 2003, XP055108076
- GARMENDIA, G. ET AL: 'Metodos para desinfeccion de frutas y hortalizas', [Online] 27 September 2006, XP055108077 Retrieved from the Internet: <URL:http://www.horticom.com/pd/imagenesl65 /406/>

## Description

### OBJECT OF THE INVENTION

The object of the present invention concerns equipment and method for the application of liquors having fungicide or fungistatic and/or phytofortifier activity of constant effectiveness to fruits and vegetables in their post-harvest.

### BACKGROUND OF THE INVENTION

Fruit and vegetable produce is generally stored for variable periods of time following their harvesting: this is the storage and marketing period. With the aim of maintaining the quality of the stored produce, use is made of post-harvest treatments like that described in patent ES2325146 which provides for drenching or washing the fruit with a fungistatic feed additive, rinsing by drenching with running water and a final preparation/waxing of the fruit.

The two main objectives of the application of post-harvest techniques to fruit and vegetable produce are: to maintain their quality in terms of appearance, texture, taste, etc.; and to reduce losses from the harvest up to reaching the market. Specifically, the primary function of treatment with liquors having fungicide/fungistatic and/or phytofortifier activity lies in preventing rotting resulting from the action of different kinds of fungi, and in some cases bacteria, on the stored fruits and vegetables.

Given that many of the fungi responsible for rotting can withstand the usual temperatures to be found in cold storage chambers and then later on develop once the temperature and humidity conditions are favourable, so it is necessary to carry out fungicide treatment prior to storage in the ripening or conservation chambers.

The most usual way of applying these treatments is by aqueous means using the system/method known as a drencher, which permits total wetting to be achieved of the fruits or vegetables, obtaining rotting reduction indices under industrial conditions of between 97-100%. This concerns drenching the fruit and vegetable produce on their arrival in the preparation centres with an abundant flow of treating liquid or liquor, applied under pressure in order to avoid harming the surface of the fruits or vegetables to treat.

A first problem of the familiar drencher system/method is related to maintenance of the liquor. The liquor is recirculated via the fruit from pallet to pallet, which means that both the remains of chemical treatments applied to the crop earlier, along with part of the dirt coming from gathering, such as leaves, twigs, earth, etc., and from the fruit itself, as well as spores and microorganisms of different kinds deposited on the plant material, are all are going to absorbed or kept in suspension. This situation means that the accumulation of contamination increases considerably with each recirculation of the liquor, causing the equipment used in this system/method, or drencher, to become a source of dissemination of microorganisms such as yeasts, fungi, bacteria, etc., which can aggravate the problem of rotting during conservation and pass on to a large number fruits any microorganism dangerous to public health that might have arrived in the fruit, or fruits, that were contaminated in the field, in collection boxes, etc.

Another additional problem of traditional drenchers, which has been confirmed with a great deal of experimental data, is related to the fact that as the pallets are treated with the same fungicide/fungistatic/phytofortifier liquor so a proportional drop takes place in the concentration of the active matter of a fungicide/fungistatic nature present it.

Moreover, in the familiar drenchers another adverse phenomenon occurs in which with each treated pallet the volume of treatment liquor reduces by approximately ten litres. In order to replenish the system with this volume of liquor that is lost in each pallet, automatic dosing devices are normally attached which add the lost ten litres to the liquor with the corresponding dose of fungicide/fungistatic/phytofortifier product that is used, as in the case of utility model ES1.053.464U in which the aim is to keep the concentration of fungicide in the reservoir of the drencher constant by means of replenishing the volume of liquid which each pallet takes away once it has been bathed.

A final familiar problem with the traditional drencher occurs due to the fact that there comes a moment in which the fungicide/fungistatic/phytofortifier liquor has to be discarded, therefore it is not "zero disposal" equipment, given that the treatment of fruits with it would not only not be effective, indeed, it has been confirmed that in many cases it increases rotting after a period of conservation, or ripening in the case of citrus fruits. Any disposal has to comply with the relevant regulations on disposals, so in principle the characteristics of the disposal has to be known by means of an analysis of these waste waters, in order to then compare the results of the parameters with the limits stated in the existing legislation. The liquors discarded in a drencher equipment, like that of patent ES2.144.343 described below in the following paragraph, do not usually come within the margins permitted by legislation, so they need to be eliminated either through a hazardous waste manager or by purifying them until they comply with the regulation. In both cases, the costs that are added on are usually high.

Patent ES2144343 (already mentioned in the previous paragraph) describes a facility and method for the control of pathogens in fruits and vegetables, which describes a facility so that a drencher system of considerable size can function requiring a very high quantity of wash liquor, with the need to have a pit for collection of the liquor. Also, the maintenance the wash solution, instead of being done continuously, is carried out in the pit which in addition requires a stirring system in the bottom. Moreover, the pit needs to be emptied periodically in order to remove, for example, any solid waste that is going to accumulate in it, as its description indicates. This patent has the aim of controlling the fungal and bacterial pathogens by means of a heating system for the liquor as an alternative to using chlorine. This patent provides for a dosing of the fungicide without taking account of the loss of concentration as it is being used. Furthermore, the dosing of the biocide in the form of chlorine is also not done continuously. Therefore, this method and facility requires the use of enormous amounts of water and chemicals, a structural complexity and a need for space for the construction of a pit and a large amount of equipment: stirrers for the pit, many different pumps, heat exchangers, different tanks, different ducts or circuits. This equipment carries out most of the disinfection of the liquor by means of heat and chlorine when the washing facility is not functioning if account is taken of the operating times of its corresponding control equipment.

In the method followed by patent ES2144343, as with the traditional systems, the effectiveness progressively decreases as the fruit is treated with the same liquor (even if the lost liquor is replenished) so at the end of the working day this exhausted and contaminated liquor has to be removed, the facility has to be disinfected and the liquor has to be managed, since it cannot be disposed of directly.

Invention patent ES2014655 proposes an alternative which requires a certain structural complexity by getting the fruit to pass through a scrubber station in which the fruit is brought into contact with means of scrubbing in order to remove the residues from the fruit and simultaneously soak just that fruit with a liquid fungicide.

On the other hand, the patent application US5850783A describes a drenching apparatus which utilizes heat as the primary means of controlling fruit pathogens.

### DESCRIPTION OF THE INVENTION

The present invention overcomes the problems described above by means of a novel "zero disposal" drencher equipment/method with a novel dosing of fungicides/fungistatics/phytofortifiers, maintaining the hygienic level of the liquor, and a self-cleaning phase for the wash liquor by means of centrifugation using a hydrocyclone and/or filtering, as described below in detail:
- A dosing method/equipment for the fungicides/fungistatics/phytofortifiers which keeps their concentrations constant in the liquor, which implies that the initial effectiveness of the treatment also remains constant.

Therefore, the dosing of the fungicide/fungistatic/phytofortifier treatment is carried out automatically by means of a programmable dosing device which is responsible for adding the required amount of fungicide for keeping its concentration constant in the liquor all the time. It has been possible to observe this in the trials conducted by the actual inventor with different active materials, among others: imazalil, thiabenzadole, orthophenylphenol, where the concentrations of the different fungicides have remained practically constant after treating more than fifty tons of fruit compared to a reduction in those concentrations of as much as 30% when dosed in the usual way with replenishments in order to maintain the habitual dosage, with ten litres per pallet being replenished with the doses of formulated fungicide products constituting each treatment.

The dosing device comprises a series of tanks, which can vary in number, and where the different formulations or substances are stored for their selective use according to the treatments being carried out in the drencher forming the object of the present invention.

The doses of fungicides/fungistatics/phytofortifiers are made either pneumatically by means of injectors operating with systems of proximity photocells which ensure the quantity of product injected without any errors due to the presence of bubbles in the case of handling high viscosity products, or it can be done using measuring cylinders filled by means of a peristaltic pump as far as electronic levelling and then emptied by means of another peristaltic pump which guarantees complete emptying of the measuring cylinder.
- Proper maintenance of the hygiene of the liquor consisting of continuously adding to the liquor a disinfecting agent or a biocide whose dosing is also done automatically by the dosing equipment.

One of the biocides that can be used consists of peracetic acid in a concentration that can range from 5 % to 15 % and hydrogen peroxide in a concentration no greater than 30 %. Another consists of quaternary ammonium at concentrations between 10% and 20% of active cationic material. By adding a suitable biocide at the correct dose it is possible to keep the fungicide/fungistatic liquor free of microorganisms. The above results are backed by various trials conducted by the inventor of the present invention:
Trial 1: the concentrations in ppm of the fungicide imazalil and that of the microorganisms in cfu/ml were measured in relation to the tons of treated fruit, obtaining as a result that with an initial dose of 425 ppm of imazadil a very similar final concentration is obtained of close to 400 ppm of imazalil with the new dosing forming the object of the present invention after having treated more than 280 tons of fruit, while the concentration of microorganisms in the treatment liquor was kept at 0 cfu/ml.
Trial 2: more than 400 tons of fruit were treated with the same liquor for over three days, with the concentration of imazalil being kept practically constant at 350 ppm. It could be seen that the liquor maintained its effectiveness as a fungicide during the entire experiment, with the presence of microorganismos being unable to be detected in the liquor during the entire process.

In a third trial, after using the same liquor for over a thousand tons of fruit, the Total Plate Count (TPC) and the count of anaerobic bacteria in the liquor managed to be kept at 0 cfu/ml.
- Additionally, the treating liquor that has been used for the treatment or washing is made to pass through some hydrocyclone type separation equipment where, as a consequence of the centrifugal force, the solid particles are dragged to the lower part where they can be stored in a collector tank, or they are extracted directly through a valve which permits the accumulated residues to be removed. The liquor, now clean of solid remains, exits through the upper part of the hydrocyclone and is led to a set of filters and/or to the feed for the drencher. The filtration through the said set of filters consists of getting the liquor to traverse a set of filters with suitable self-cleaning so that it can then proceed to its automatic cleaning and subsequent physical elimination of the slurry, sands and coarse remains of leaves, twigs, etc. This filtering system comprises a filtering means made up of a stack of slotted discs, a support and functional structure and an auxiliary element consisting of a clogging retardant which manages to reduce the number of self-cleanings to a minimum, contributing to the consequent saving in water. In the event that the water used in the self-cleaning of the filter is excessively loaded with solids, the water can be ducted to a sleeve filter, which has very low maintenance requirements, where the solids are retained. Once this phase of centrifugation and/or filtering is completed, the same treatment liquor is made to return to the tank for the drencher so that it can start a new cycle.

So, the present invention succeeds in keeping the liquor at certain reasonably constant levels of concentration of fungicides/fungistatics/phytofortifiers, and on the other hand it manages to prevent any accumulation in the treatment liquor either of microorganisms or of bacteria which could cause fermentation to take place in it. A considerable reduction is achieved in the consumption of water and of fungicide and/or phytofortifier formulations.

At the same time, given that the present invention contains a system that prevents the accumulation of slurry, sands and coarse remains of leaves, twigs, etc. as well as maintaining the initial level of effectiveness of the treatment, there is no need to manage the waste waters obtained following the treatments, which would otherwise be heavily loaded with chemical contaminants, sometimes with a high level of environmental toxicity and frequently a source of unpleasant and/or harmful effluents.

Therefore, the problem created by the loss of effectiveness of the liquor as the pallets of fruit and vegetable produce are progressively treated is successively solved. With this invention it is possible to maintain maximum and constant effectiveness in the treatment over the course of thousands of pallets and batches that can be treated during a harvest.

Additionally, with the drencher and the "zero disposal" method which this patent concerns, no disposals of liquor are made during the harvest since the liquor is constantly filtered and sanitised for its reuse, unlike with the traditional system where the liquor has to be disposed of at the end of the working day, by any appropriate means. The variability in the residues of fungicides in treated fruits and vegetables manages to be considerably reduced, with the advantage that this implies for producers and exporters of these products.

The present invention entails a very important improvement from the environmental point of view for companies that handle and market fresh fruit and vegetable produce.

With the method and equipment of the present invention, the effectiveness remains constant from the start of the harvest up to the end without any need to change and manage the waste liquor.The necessary quantity of fungicide is added in order to maintain the same initial concentration, thus obtaining a saving in raw materials, in water, in hazardous waste management and in labour.

### BRIEF DESCRIPTION OF THE DRAWINGS

The following figure is included in order to facilitate an understanding of the invention:

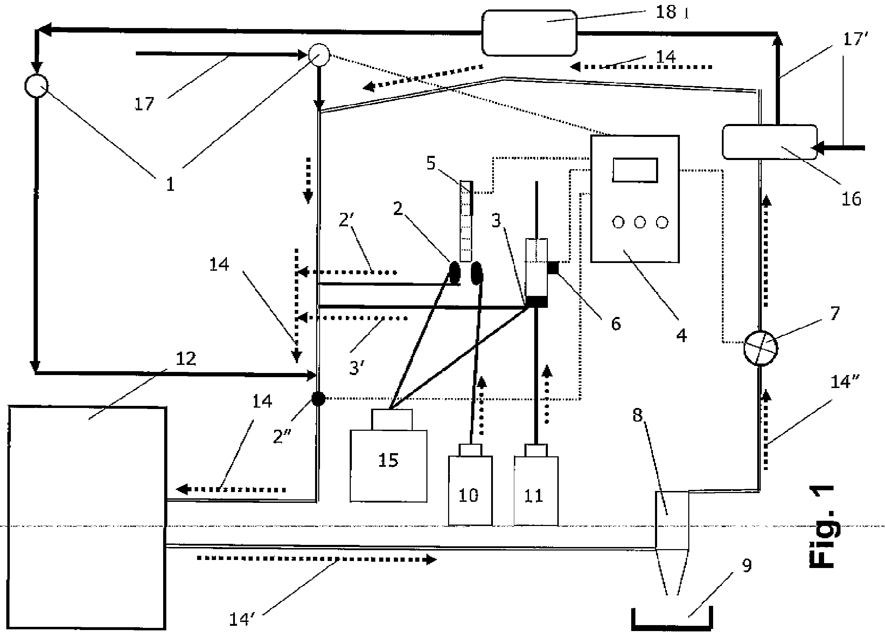

- Figure 1: diagram of the functioning of the drencher method/equipment, the object of the present invention.

### PREFERRED EMBODIMENT OF THE INVENTION

Zero disposal drencher with a novel dosing system for fungicide and/or phytofortifier treatment, hygienic maintenance of the liquor and a self-cleaning phase of the liquor, as described below in detail:
Figure 1 shows a diagram of the functioning of the zero disposal drencher method/equipment in which a flow of feed water (17) can be seen, which provides the aqueous medium for the treatment liquor of the drencher, towards the wash chamber (12) of the drencher equipment and a flow meter (1) connected to an electronic control panel (4).

The wash liquor (14) is formed by means of adding to the flow of feed water for the drencher, which passes through a flow controller (1), a dosing (2',3') of the fungicides/fungistatics/phytofortifiers which is done automatically by means of some dosing devices (2,3), programmable and controlled by the electronic control panel (4) which adds the necessary quantity of fungicide/phytofortifier for keeping their concentration constant in the treatment liquor (14). A sensor (2") can be incorporated in order to check the concentration of fungicides/fungistatics/phytofortifiers in the entrance liquor (14) into the drencher and connected to the control panel (4), in such a way that the latter (4) is continually checking that the dosing (2', 3') is correct at all times.

The dosing devices (2,3) present a series of tanks (10,11) where the different formulations and substances can be stored for their selective use according to the treatments carried out at any time. The dosings (2',3') of fungicides/fungistatics/phytofortifiers can be done by pneumatic means (3) by means of injectors operating with systems of proximity photocells (6) which ensure the quantity of product injected without any errors due to the presence of bubbles in the case of handling high viscosity products, or it can be done using measuring cylinders (2) and safety liquid detectors (5), filled by means of a peristaltic pump as far as electronic levelling and then emptied by means of another peristaltic pump which guarantees complete emptying of the measuring cylinder.

Continually added to the treatment liquor (14) is a biocide (15) whose dosing can be done automatically, controlled by the electronic control panel (4), via the dosing equipment (2,3). Said addition of biocide (15) is done according to the replenishment of water in the entrance liquor (14) into the drencher. One of the biocides that can be used consists of peracetic acid in a concentration that can range from 5 % to 15 % and hydrogen peroxide in a concentration no greater than 30 %. Another alternative biocide consists of quaternary ammonium at concentrations between 10% and 20% of active cationic material. The addition of the biocide (15) allows the fungicide/fungistatic liquor to be kept free of microorganisms.

Represented in figure 1 is an embodiment in which the treating liquor (14') coming from the wash chamber of the drencher (12) is made to circulate through a hydrocyclone (8) where, as a consequence of the centrifugal force, the solid particles are dragged to the lower part thereof and are stored in a collector tank (9). The liquor (14"), now clean of suspended particles extracted by the hydrocyclone, exits via the upper part of the hydrocyclone (8) and, with the aid of an impulsion pump (7), is made to pass through some self-cleaning filters (16) comprising a series of elements that are not represented due to their being known in the state of the art: a stack of slotted discs, a support structure and a clogging retardant which manages to reduce the number of self-cleanings to a minimum, contributing to the consequent saving in water. In the embodiment described here, the water (17') used in the self-cleaning of the filter, in the embodiment of figure 1, comes from the outside supply network and after it has been used is once more redirected, following a filtering stage (18), to the feed water system for the drencher. Alternatively (not shown), the water used in the self-cleaning filter can come from the same feed water for the drencher and afterwards be returned as feed water from the drencher equipment.

As can be seen in figure 1, the method and the drencher equipment described here are controlled from the electronic control panel (4) which is connected to the flow meter (1) for the feed water for the drencher in order to regulate the flow thereof; to the dosing devices (2,3) for controlling the correct dosage (2',3') of fungicides/phytofortifiers and of biocide; and to the impulsion pump (7) for filtering the liquor.

## Claims

1. Drencher type method of fungicide treatment which uses a liquor (14) for treating the content of some pallets prior to storage of said content in some conservation chambers **characterised by** comprising:
a dosing (2',3'), automatically and programmed at least according to the type of treatment to carry out, of fungicide and/or fungistatic and/or phytofortifier agents which keeps the concentrations thereof in said liquor (14) constant, wherein a flow of feed water (17) provides the aqueous medium for the treatment liquor (14) of the drencher, towards a wash chamber (12) of the drencher equipment and a flow meter (1) connected to an electronic control panel (4),
a continual addition to said liquor (14) of a biocide (15), and
a continual filtering (8,16) of the treatment liquor (14',14"),
said treatment resulting in being one of zero disposal.

2. Method according to claim 1, **characterised in that** said dosing (2',3') of fungicide and/or fungistatic and/or phytofortifier agents is carried out by means of dosing devices (2, 3), programmable and controlled by the electronic control panel (4) which adds the necessary quantity of fungicide/ phytofortifier for keeping their concentration constant in the treatment liquor (14).

3. Method according to claim 1 or 2, **characterised in that** said addition of biocide (15) is done in accordance with the replenishment of water in the entrance liquor (14) into the drencher.

4. Method according to any of the above claims, **characterised in that** said biocide (15) is composed of peracetic acid in a concentration that can range from 5% to 15 % and hydrogen peroxide in a concentration no greater than 30 %.

5. Method according to any of claims 1 to 3, **characterised in that** said biocide (15) is composed of quaternary ammonium at concentrations between 10% and 20% of active cationic material.

6. Method according to any of claims 1 to 3, **characterised in that** said filtering of the treatment liquor (14') consists of passing it through a hydrocyclone (8).

7. Method according to any of the above claims, **characterised in that** said liquor is furthermore subjected to a filtering of the self-cleaning type (16) using a supply of water.

8. Method according to the above claim, **characterised in that** the water used in the self-cleaning filtering (16) comes from the same feed water for the drencher which is afterwards returned as feed water for the drencher equipment.

9. Method according to claim 7, **characterised in that** the water used in the self-cleaning filtering (16) comes from outside (17').

10. Method according to the above claim, **characterised in that the** water (17') used in the self-cleaning filtering (16) is afterwards filtered (18) and sent as feed water for the drencher equipment.

11. Drencher type equipment for fungicide treatment which uses a liquor (14) for treating the content of some pallets **characterised by** comprising:
a control panel (4),
at least one supply of water, wherein a flow of feed water (17) provides the aqueous medium for said liquor (14) towards a wash chamber (12) of the drencher equipment, with a flow meter (1) connected to said control panel (4),
at least one dosing device (2,3) for fungicide treatment substances for the liquor (14) and controlled by the control panel (4),
at least one tank (10,11) of fungicide substances connected to said dosing device (2,3), and
at least one tank of biocide (15) connected to said dosing device (2,3), and
at least one means of separation (8,16) of solids dragged in the treating liquor (14',14"); and
wherein said control panel (4) permits dosing of said fungicide treatment substances and said biocide in a way that is automatic.

12. Equipment according to the above claim, **characterised in that** it furthermore comprises a sensor (2") for checking the concentration of fungicides/fungistatics/phytofortifiers in the entrance liquor (14) into the drencher connected to the control panel (4).

13. Equipment according to either of claims 11 and 12, **characterised in that** said separation means for solids dragged in the treating liquor (14') incorporates a hydrocyclone (8).

14. Equipment according to any of claims 11 to 13, **characterised in that** said separation means for solids dragged in the treating liquor (14',14") incorporates a filtering means (16) for the treating liquor (14") consisting of a set of filters with self-cleaning comprising a stack of slotted discs, a support structure and an auxiliary clogging retardant element.

15. Equipment according to the above claim, **characterised in that** said filtering means (16) uses a flow of water (17') from an outside network.

16. Equipment according to the above claim, **characterised in that** it incorporates a water circulation circuit (17') used in the filtering means (16) in which said water is filtered (18) and sent to the feed water (1) for said drencher equipment.

17. Equipment according to claim 14, **characterised in that** the filtering means (16) is fed with water coming from the same feed water for the drencher which is later on returned as feed water for the drencher equipment.

18. Equipment according to any of claims 11 to 17, **characterised in that** it incorporates an impulsion pump for the treating liquor (14',14") controlled by the control panel (4).

19. Equipment according to any of claims 11 to 18, **characterised in that** said dosing device (3) for fungicide/fungistatic/phytofortifier substances is of the pneumatic type consisting of an injector (3).

20. Equipment according to any of claims 11 to 19, **characterised in that** at least one dosing device (2) for fungicides/fungistatics/phytofortifiers consisting of filling measuring cylinders by means of a peristaltic pump as far as electronic levelling emptying of the measuring cylinder by means of another peristaltic pump.

## Patentansprüche

1. Verfahren vom Sprühgerättyp zur Fungizidbehandlung, das eine Flüssigkeit (14) zum Behandeln des Inhalts einiger Palletten vor Lagerung des Inhalts einiger Konservierungskammern verwendet, **dadurch gekennzeichnet, dass** es umfasst:
eine automatische und zumindest gemäß der Art von auszuführender Behandlung programmierte Dosierung (2', 3') von fungiziden und/oder fungistatischen und/oder pflanzenstärkenden Mitteln, die deren Konzentrationen in der Flüssigkeit (14) konstant hält, wobei ein Strom von Beschickungswasser (17) das wässrige Medium für die Behandlungsflüssigkeit (14) des Sprühgeräts zu einer Waschkammer (12) der Sprühgerätausrüstung bereitstellt und ein Strömungsmesser (1) mit einer elektronischen Steuertafel (4) verbunden ist,
eine stetige Zugabe der Flüssigkeit (14) eines Biozids (15) und
ein stetiges Filtern (8, 16) der Behandlungsflüssigkeit (14', 14"),
wobei die Behandlung zu jener führt, die keiner Entsorgung bedarf.

2. Verfahren nach Anspruch 1, **dadurch gekennzeichnet, dass** die programmierte Dosierung (2', 3') von fungiziden und/oder fungistatischen und/oder pflanzenstärkenden Mitteln mittels Dosierungsvorrichtungen (2, 3) ausgeführt wird, die durch die elektronische Steuertafel (4) programmierbar und gesteuert sind, die die notwendige Menge an fungiziden/pflanzenverstärkenden Mitteln zugibt, um deren Konzentration in der Behandlungsflüssigkeit (14) konstant zu halten.

3. Verfahren nach Anspruch 1 oder 2, **dadurch gekennzeichnet, dass** die Zugabe eines Biozids (15) in Übereinstimmung mit dem Nachfüllen von Wasser in der Eintrittsflüssigkeit (14) in das Sprühgerät erfolgt.

4. Verfahren nach einem der obenstehenden Ansprüche, **dadurch gekennzeichnet, dass** das Biozid (15) aus Peressigsäure in einer Konzentration, die von 5 % bis 15 % reichen kann, und Wasserstoffperoxid in einer Konzentration von nicht mehr als 30 % besteht.

5. Verfahren nach einem der Ansprüche 1 bis 3, **dadurch gekennzeichnet, dass** das Biozid (15) aus quaternärem Ammonium bei Konzentrationen zwischen 10 % und 20 % aktivem kationischen Material besteht.

6. Verfahren nach einem der Ansprüche 1 bis 3, **dadurch gekennzeichnet, dass** das Filtern der Behandlungsflüssigkeit (14') aus deren Hindurchleiten durch einen Hydrozyklon (8) besteht.

7. Verfahren nach einem der obenstehenden Ansprüche, **dadurch gekennzeichnet, dass** die Flüssigkeit ferner einem Filtern vom Selbstreinigungstyp (16) unter Verwendung einer Wasserzufuhr unterzogen wird.

8. Verfahren nach einem der obenstehenden Ansprüche, **dadurch gekennzeichnet, dass** das Wasser, das beim selbstreinigenden Filtern (16) verwendet wird, von demselben Beschickungswasser für das Sprühgerät kommt, das anschließend als Beschickungswasser für die Sprühgerätausrüstung zurückgeleitet wird.

9. Verfahren nach Anspruch 7, **dadurch gekennzeichnet, dass** das Wasser, das beim selbstreinigenden Filtern (16) verwendet wird, von außen (17') kommt.

10. Verfahren nach obenstehendem Anspruch, **dadurch gekennzeichnet, dass** das Wasser (17'), das beim selbstreinigenden Filtern (16) verwendet wird, anschließend gefiltert (18) und als Beschickungswasser zur Sprühgerätausrüstung geleitet wird.

11. Ausrüstung vom Sprühgerättyp zur Fungizidbehandlung, das eine Flüssigkeit (14) zum Behandeln des Inhalts einiger Palletten vor Lagerung des Inhalts einiger Konservierungskammern verwendet, **dadurch gekennzeichnet, dass** sie umfasst:
eine Steuertafel (4),
wenigstens eine Wasserzufuhr, wobei ein Strom von Beschickungswasser (17) das wässrige Medium für die Flüssigkeit (14) zu einer Waschkammer (12) der Sprühgerätausrüstung bereitstellt und ein Strömungsmesser (1) mit der elektronischen Steuertafel (4) verbunden ist,
mindestens eine Dosierungsvorrichtung (2, 3) für fungizide Behandlungssubstanzen für die Flüssigkeit (14) und gesteuert durch die Steuertafel (4),
mindestens einen Tank (10, 11) für fungizide Substanzen, der mit der Dosierungsvorrichtung (2, 3) verbunden ist, und
mindestens einen Tank für ein Biozid (15), der mit der Dosierungsvorrichtung (2, 3) verbunden ist, und
mindestens ein Mittel zum Abtrennen (8, 16) von Feststoffen, die in der Behandlungsflüssigkeit (14', 14") mitgeführt werden; und
wobei die Steuertafel (4) ein Dosieren der fungiziden Behandlungssubstanzen und des Biozids auf eine Weise ermöglicht, die automatisch ist.

12. Ausrüstung nach dem obenstehenden Anspruch, **dadurch gekennzeichnet, dass** sie ferner einen Sensor (2") zum Prüfen der Konzentration der Fungizide/Fungistatika/Pflanzenstärkungsmittel in der Eintrittsflüssigkeit (14) in das Sprühgerät umfasst, das mit der Steuertafel (4) verbunden ist.

13. Ausrüstung nach einem der Ansprüche 11 und 12, **dadurch gekennzeichnet, dass** das Abtrennungsmittel für Feststoffe, die in der Behandlungsflüssigkeit (14') mitgeführt werden, einen Hydrozyklon (8) enthält.

14. Ausrüstung nach einem der Ansprüche 11 bis 13, **dadurch gekennzeichnet, dass** das Abtrennungsmittel für Feststoffe, die in der Behandlungsflüssigkeit (14', 14") mitgeführt werden, ein Filtermittel (16) für die Behandlungsflüssigkeit (14") enthält, das aus einem Satz von Filtern mit Selbstreinigung besteht, umfassend eine Stapel geschlitzter Scheiben, eine Trägerstruktur und ein Hilfselement zum Verzögern einer Verstopfung.

15. Ausrüstung nach dem obenstehenden Anspruch, **dadurch gekennzeichnet, dass** das Filtermittel (16) einen Wasserstrom (17') von einem externen Netz verwendet.

16. Ausrüstung nach dem obenstehenden Anspruch, **dadurch gekennzeichnet, dass** sie einen Wasserzirkulationskreislauf (17') enthält, der in dem Filtermittel (16) verwendet wird, in dem das Wasser gefiltert (18) und zum Beschickungswasser (1) für die Sprühgerätausrüstung geleitet wird.

17. Ausrüstung nach Anspruch 14, **dadurch gekennzeichnet, dass** das Filtermittel (16) mit Wasser beschickt wird, das von dem Beschickungswasser für das Sprühgerät kommt, das später als Beschickungswasser für die Sprühgerätausrüstung zurückgeleitet wird.

18. Ausrüstung nach einem der Ansprüche 11 bis 17, **dadurch gekennzeichnet, dass** sie eine Antriebspumpe für die Behandlungsflüssigkeit (14', 14") beinhaltet, die durch die Steuertafel (4) gesteuert wird.

19. Ausrüstung nach einem der Ansprüche 11 bis 18, **dadurch gekennzeichnet, dass** die Dosierungsvorrichtung (3) für fungizide/fungistatische/pflanzenstärkende Substanzen vom pneumatischen Typ ist, der aus einem Injektor (3) besteht.

20. Ausrüstung nach einem der Ansprüche 11 bis 19, **dadurch gekennzeichnet, dass** mindestens eine Dosierungsvorrichtung (2) für fungizide/fungistatische/pflanzenstärkende Mittel aus einem Füllen von Messzylindern mittels einer peristaltischen Pumpe bis zur elektronischen Einpegelung, Leeren des Messzylinders durch eine andere peristaltische Pumpe besteht.

## Revendications

1. Procédé de traitement fongicide de type trempage qui utilise une liqueur (14) pour traiter le contenu de palettes avant le stockage dudit contenu dans des chambres de conservation **caractérisé en ce qu'**il comprend :
un dosage (2', 3'), automatique et programmé au moins selon le type de traitement à effectuer, d'agents foncigides et/ou fongistatiques et/ou phytofortifiants qui maintient leurs concentrations dans ladite liqueur (14) constantes, dans lequel un flux d'eau d'alimentation (17) fournit au milieu aqueux la liqueur de traitement (14) du dispositif de trempage, vers une chambre de lavage (12) du dispositif de trempage et un débitmètre (1) relié à un panneau de commande électronique (4),
une addition continue à ladite liqueur (14) d'un biocide (15), et
une filtration continue (8, 16) de la liqueur de traitement (14', 14"),
ledit traitement autorisant aucune élimination.

2. Procédé selon la revendication 1, **caractérisé en ce que** ledit dosage (2', 3') d'agents fongicides et/ou fongistatiques et/ou phytofortifiants est réalisé au moyen de dispositifs de dosage (2, 3), programmables et commandés par le panneau de commande électronique (4) qui ajoute la quantité nécessaire de fongicide/phytofortifiant pour maintenir leurs concentrations constantes dans la liqueur de traitement (14).

3. Procédé selon la revendication 1 ou 2, **caractérisé en ce que** ledit ajout de biocide (15) est effectué en fonction du réapprovisionnement d'eau dans la liqueur d'entrée (14) dans le dispositif de trempage.

4. Procédé selon l'une quelconque des revendications précédentes, **caractérisé en ce que** ledit biocide (15) est composé d'acide péracétique à une concentration pouvant varier de 5 % à 15 % et de peroxyde d'hydrogène à une concentration non supérieure à 30 %.

5. Procédé selon l'une quelconque des revendications 1 à 3, **caractérisé en ce que** ledit biocide (15) est composé d'ammonium quaternaire à des concentrations comprises entre 10 % et 20 % de matériau cationique actif.

6. Procédé selon l'une quelconque des revendications 1 à 3, **caractérisé en ce que** ladite filtration de la liqueur de traitement (14') consiste à la faire passer à travers un hydrocyclone (8).

7. Procédé selon l'une quelconque des revendications précédentes, **caractérisé en ce que** ladite liqueur est en outre soumise à une filtration du type auto-nettoyante (16) en utilisant un apport en eau.

8. Procédé selon la revendication précédente, **caractérisé en ce que** l'eau utilisée dans la filtration auto-nettoyante (16) provient de la même eau d'alimentation que pour le dispositif de trempage laquelle est ensuite renvoyée comme eau d'alimentation pour le dispositif de trempage.

9. Procédé selon la revendication 7, **caractérisé en ce que** l'eau utilisée dans la filtration auto-nettoyante (16) provient de l'extérieur (17').

10. Procédé selon la revendication précédente, **caractérisé en ce que** l'eau (17') utilisée dans la filtration auto-nettoyante (16) est ensuite filtrée (18) et envoyée comme eau d'alimentation pour le dispositif de trempage.

11. Dispositif de trempage pour le traitement fongicide qui utilise une liqueur (14) pour le traitement du contenu de palettes **caractérisé en ce qu'**il comprend :
un panneau de contrôle (4),
au moins une alimentation d'eau, dans laquelle un flux d'eau d'alimentation (17) fournit au milieu aqueux ladite liqueur (14) vers une chambre de lavage (12) du dispositif de trempage, avec un débitmètre (1) connecté audit panneau de commande (4),
au moins un dispositif de dosage (2, 3) pour les substances fongicides de traitement pour la liqueur (14) et contrôlé par le panneau de commande (4),
au moins un réservoir (10, 11) des substances fongicides connecté audit dispositif de dosage (2, 3), et
au moins un réservoir (10, 11) du biocide connecté audit dispositif de dosage (2, 3), et
au mois un moyen de séparation (8, 16) des solides traînés dans la liqueur de traitement (14', 14") ; et
dans lequel ledit panneau de commande (4) permet le dosage desdites substances fongicides de traitement et dudit biocide d'une manière qui est automatique.

12. Dispositif selon la revendication précédente, **caractérisé en ce qu'**il comprend en outre un capteur (2") pour contrôler la concentration de fongicides/fongistatiques/phytofortifiants dans la liqueur d'entrée (14) dans le dispositif de trempage connectée au panneau de commande (4).

13. Dispositif selon l'une ou l'autre des revendications 11 et 12, **caractérisé en ce que** ledit moyen de séparation des solides traînés dans la liqueur de traitement (14') comprend un hydrocyclone (8).

14. Dispositif selon l'une quelconque des revendications 11 à 13, **caractérisé en ce que** ledit moyen de séparation des solides traînés dans la liqueur de traitement (14') comprend un moyen de filtration (16) de la liqueur de traitement (14") consistant en un ensemble de filtres à auto-nettoyage comprenant une pile de disques à fente, une structure de support et un élément auxiliaire retardateur de colmatage.

15. Dispositif selon la revendication précédente, **caractérisé en ce que** ledit moyen de filtration (16) utilise un flux d'eau (17') à partir d'un réseau extérieur.

16. Dispositif selon la revendication précédente, **caractérisé en ce qu'**il comprend un circuit de circulation d'eau (17') utilisé dans le moyen de filtrage (16) dans lequel ladite eau est filtrée (18) et envoyée dans l'eau d'alimentation (1) pour ledit dispositif de trempage.

17. Dispositif selon la revendication 14, **caractérisé en ce que** le moyen de filtration (16) est alimenté avec de l'eau provenant de la même eau d'alimentation que pour le dispositif de trempage, laquelle est ensuite renvoyée comme eau d'alimentation pour le dispositif de trempage.

18. Dispositif selon l'une quelconque des revendications 11 à 17, **caractérisé en ce qu'**il comprend une pompe à impulsion pour la liqueur de traitement (14', 14") commandée par le panneau de commande (4).

19. Dispositif selon l'une quelconque des revendications 11 à 18, **caractérisé en ce que** ledit dispositif de dosage (3) des substances fongicides/fongistatiques/ phytofortifiants est du type pneumatique constitué par un injecteur (3).

20. Dispositif selon l'une quelconque des revendications 11 à 19, **caractérisé en ce qu'**au moins un dispositif de dosage (2) pour fongicides/fongistatiques/ phytofortifiants consiste à remplir des cylindres de mesure au moyen d'une pompe péristaltique jusqu'au vidage électronique du cylindre de mesure au moyen d'une autre pompe péristaltique.
